Europäisches Patentamt

European Patent Office

Office européen des brevets

Publication number: **0 275 562**
**A2**

# EUROPEAN PATENT APPLICATION

(21) Application number: 87119356.1

(22) Date of filing: 30.12.87

(51) Int. Cl.⁴: **B65G 23/44** , B65G 23/36 , B65G 43/00

(30) Priority: **13.01.87 IT 1905987**

(43) Date of publication of application:
**27.07.88 Bulletin 88/30**

(84) Designated Contracting States:
**DE FR GB**

(71) Applicant: **TECNO POOL S.p.A.**
**Via L. Da Vinci**
**I-35010 Marsango Padova(IT)**

(72) Inventor: **Pessa, Luciano**
**Via Vicenza No. 25/B**
**I-35042 Este Padova(IT)**

(74) Representative: **Petruzzelli, Antonio**
**Via E. De Amicis No. 25**
**I-20123 Milan(IT)**

(54) **Speed control device for conveyor drive units.**

(57) A speed control device for the drive units of conveyor belts, in particular those of the chain type.

The device comprises means (22) capable of sensing the difference in speed between the upper branch and the lower branch of the conveyor belt (10), in correspondence with each drive unit (15); said sensing means (22) are in the form of a rolling member disposed between the two upper and lower branches of the belt (10), said sensing member (22) being freely rotatable and running in both directions, along the belt (10), so as to operate an electrical control device of the motor (18) of the drive unit (15), which operates to time the speed of the drive unit.

**Fig.1**

# Speed control device for conveyor drive units

The present invention refers to a control device for the speed of drive units for conveyor belts of the type comprising an endless conveyor belt which is developed along a pre-established path; this belt in one embodiment to which the present invention is particularly directed, is substantially constituted of two chains, preferably of the link type, connected by cross bars, in which each chain comprises a first upper branch, movable in one direction, and a second lower branch, situated underneath and movable in the opposite direction to the first, in which the conveyor belt is operated to move at a pre-established speed, by means of several drive units suitably spaced apart from each other.

In conveyors of the above-mentioned kind, each drive unit acts by drawing both the upper branch and the lower branch of the belt in the section of the conveyor comprised between successive drive units, each drive unit acting in order to draw the upper branch in the section immediately before or "upstream", with reference to the conveying direction of the goods, and respectively to draw the lower branch of the "downstream" conveyor belt comprised between the drive unit under consideration and the drive unit immediately following.

In conveyors of the kind mentioned above, there exists the problem of controlling the speeds of the various drive units in order to ensure the time working of the sections of conveyor comprised between successive groups, a problem that assumes particular importance in conveyors of large dimensions, where a multiplicity of drive units has to be adequately controlled and the drive units have to be dimensioned in such a way as to ensure the advancing of the conveyor belt at a constant and controlled speed, compensating from time to time for any eventual differences that may occur during the working.

Among the factors that may have a negative influence on the correct functioning or working of conveyors of the above-mentioned kind, especially in conveyors that make use of chain belts, is the possibility of variations in length which the chains undergo both in localized sections and over the entire path of the conveyor, because of the variable tolerances of the chain pitch, and, by reason of wear which may occur in the course of time on the chains and on the guides themselves of the conveyor.

The use of induction motors with variable speeds for operating several drive units, creates further speed control problems, particularly when the various sections of the conveyor are differently affected by the tolerances and by chain wear and also by the weight and positioning of the load conveyed.

If we consider a conveyor section comprised between two successive drive units, the drive and the speed of the upper branch of the belt, in the section under consideration, will be determined by the drive unit located "downstream" in relation to the conveying direction of the goods, while the drive and running speed of the lower branch of the belt, will depend on the drive unit located immediately "upstream" in relation to the preceding one. In general term, speed variations in the two drive units do not involve negative consequences for the lower branch, because eventual tendencies to a slackening or to a greater tautness of the belt or the lateral chains, are automatically compensated by special loops provided in the lower branch in correspondence with each drive unit.

On the contrary, speed variations in the drive units or some of these have a negative effect for the upper branch, the sections of which theoretically should all be drawn with the same linear speed of advancing of the load, in order to avoid, for example, either an undesired slackening of the chains, which would cause jamming and the possibility of the chains getting out of the lateral guides, or an excessive tautness, with consequent increased wear of the chains and the running guides, or the possible breaking of the chains themselves.

The use of electronic speed control systems for the motors of the various drive units, besides requiring complex and very costly solutions, does not completely resolve the problem, since in practice standarizable situations of use do not exist, for one conveyor differs form another both in length and in type of path, and as regards both the quantity and the weight of the goods to be conveyed; also one must take into consideration the extremely variable tolerances of construction and wear of the belt of the conveyor. In practice, it is necessary to proceed by attempts, finding from time to time both the correct positioning and the right control power for each drive unit, with long times for the setting up of each plant.

Moreover, to ensure that the conveyor belt or its chains are constantly taut, and to avoid an undesired slackening of the various sections of the belt of the upper branch, in practice it is necessary to operate with gradually increasing drive powers, in passing form one drive unit to the successive one; this requires the use of electric motors capable of assuming part of the load of the "upstream" drive units, as the conveyor moves on its path from the loading point to the unloading point.

As a consequence of this, the electric motors of the end drive units, must be dimensioned for control powers 30 and 40% or more greater than the powers required for the former drive units, according to the weights of the loads to be conveyed.

Instead it would be desirable to operate with homogeneous drive units, if possible, or units dimensioned for the power necessary to draw the conveyor belt and the load supported by it, only for the section of belt that each unit is responsible for, thus ensuring a synchronized working of all the drive units; this would make it possible, not only to considerably simplify the plan by guaranteeing its correct functioning, but also to reduce the costs. It would also be desirable to be able to effect a line-up of the conveyor in relatively brief times without having to calculate from time to time the powers and the positionings of each of the drive units, to ensure that these automatically intervene to control and compensate for eventual speed variations of the upper branch of the belt, owing to the causes described previously.

Therefore the object of present invention is to contribute to the solution of the problem evidenced, by means of a speed control device for drive units in belt conveyors that is constructively simple and makes it possible to have an adjustment and an automatic compensation of the drive speed of the various consecutive units, without causing jamming, and thus reducing the problems of wear of the chains and the running guides, since no other forces are introduced apart from those necessary for the simple drawing of the conveyor.

In order to achieve the objective proposed and resolve the problem evidenced, according to the present invention, we have started from the presuposition that an eventual variation of speed in a drive unit causes a differential variation of the speed of the upper branch of the belt as compared with the lower branch.

According to the present invention, this differential speed variation is exploited to cause the shifting of sensing means in the form of a rolling member, disposed between the two branches of the belt in such a way that it can freely rotate and move along the belt itself, and to control through the shifting of such sensing member the functioning of the electric motor of each drive unit; in this way it is possible to act on an appropriate electric circuit to reduce or increase proportionally the speed of each single drive unit so as to restore the timed working of the various sections of the conveyor. Therefore, not only is it possible to avoid the arising of the difficulties evidenced above, but it is possible to operate with drive units similarly dimensioned or dimensioned for the power necessary only for drawing the section of belt that each group is responsible for.

The invention will be more fully illustrated here below, with reference to the example given in the attached drawings, in which :

Fig. 1 - represents the scheme of the plan of a generic conveyor according to the present invention;

Fig. 2 - is an enlarged cross-sectional view in correspondence with the running guides of the belt for the conveyor shown in Fig. 1;

Fig. 3 - shows schematically a plan view of a generic drive unit;

Fig. 4 - is an illustrative scheme of the working mode of the device according to the present invention;

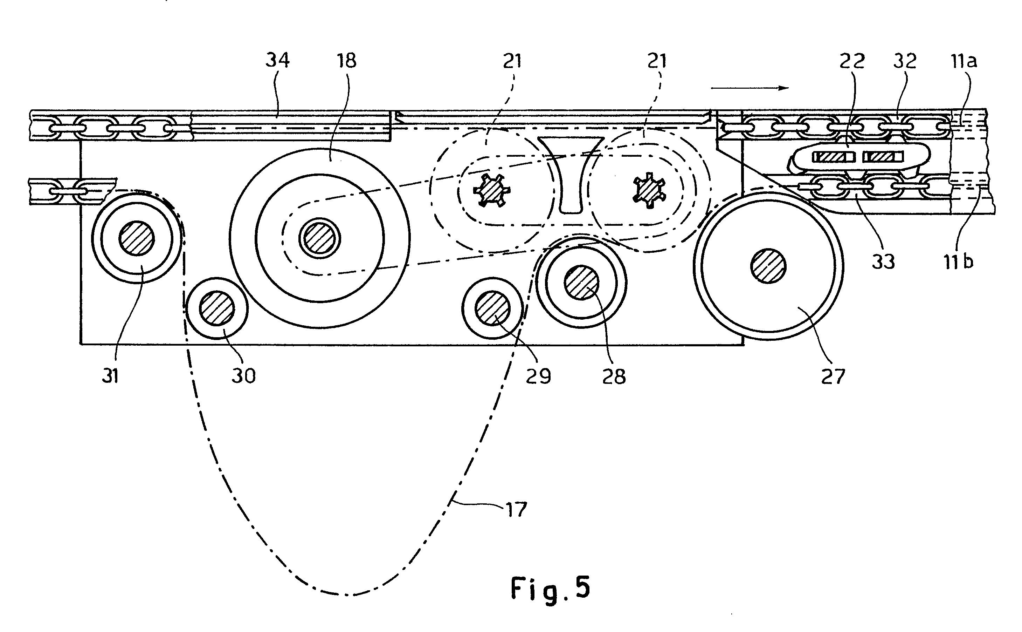

Fig. 5 - is a view according to the line 5-5 of Fig. 3, referring to an embodiment of a drive unit comprising a crawler type control device, according to the present invention;

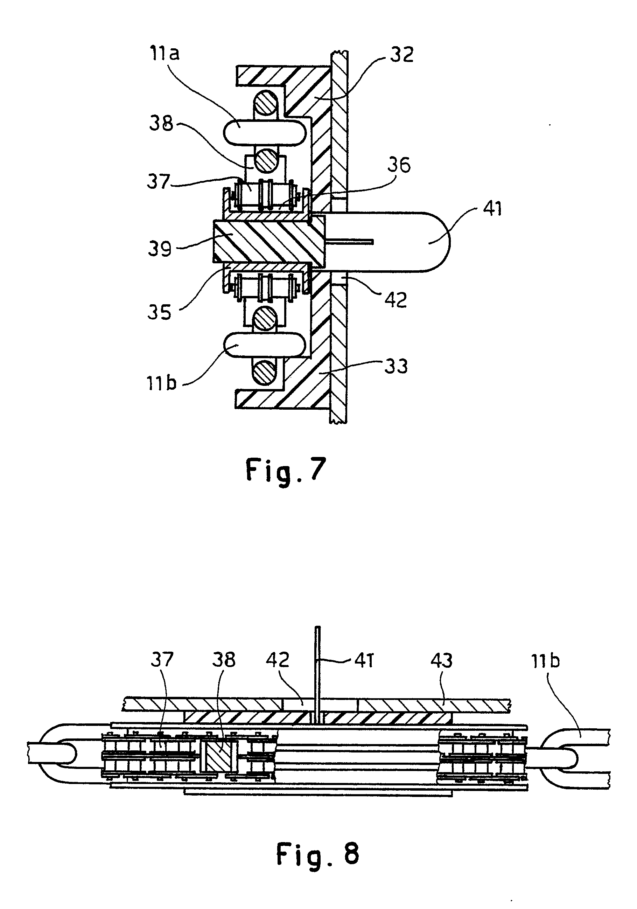

Fig. 6 - is an enlarged particular of Fig. 5;

Fig. 7 - is a cross-sectional view according to the line 7-7 of Fig. 6;

Fig. 8 - is a plan view made according to the line 8-8 of Fig. 6.

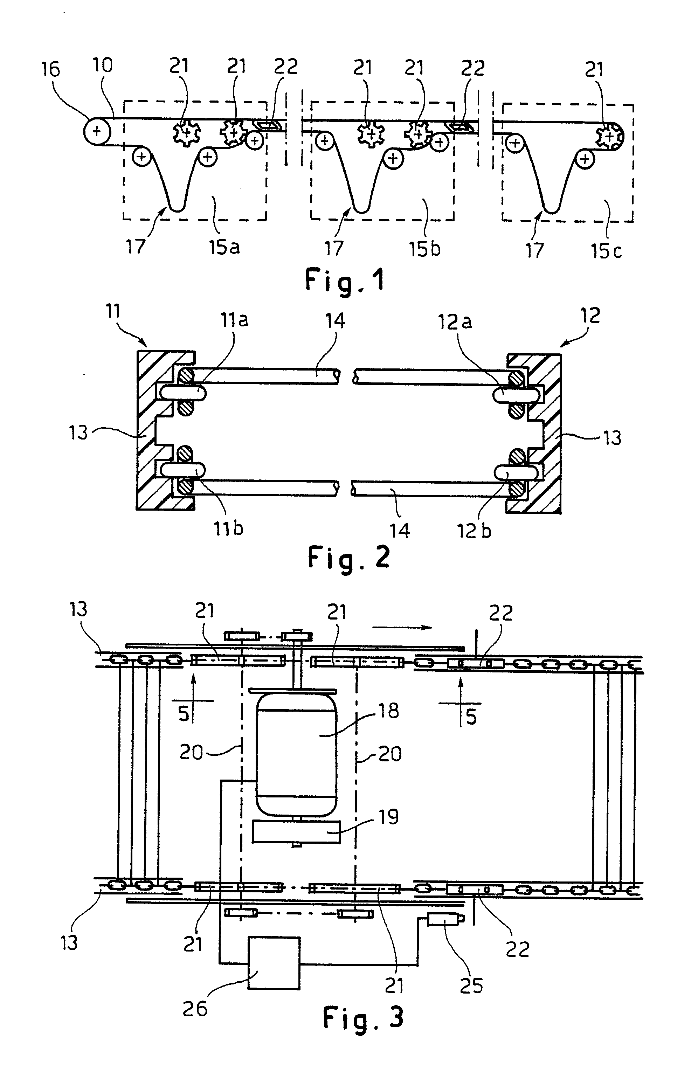

With reference to the drawings from Fig. 1 to Fig. 4, we will illustrate the general characteristics of a chain conveyor, incorporating the speed control device for drive units according to the present invention.

As shown, the conveyor comprises an endless conveyor belt 10, which develops along a pre-established path of any form and length. In the case under consideration, the conveyor belt 10 is substantially constituted of two link chains 11 and 12, each having a first upper branch 11a and 12a corresponding to the upper branch of the conveyor belt, and a second lower branch 11b and 12b, also called return branch, positioned underneath and in proximity to the first. The links of the two chains 11 and 12 are connected with each other by means of cross bars 14 defining the conveying surface of the belt.

The conveyor 10 is actuated to move at a prefixed speed, by means of a certain number of drive units 15 opportunely spaced apart along the conveyor, and dimensioned in such a way that each drive unit draws the sections of conveyor belt, upper and lower, that belong to it. In particular, the first drive unit 15 marked with the suffix "a", or drive unit 15a of Fig. 1, draws the upper and lower portions of belt comprised between the same drive unit and the transmission roller 16, and contemporaneously draws the portion of lower belt comprised between the drive unit 15a and the drive unit 15b immediately following, which is situated "downstream" of the preceding one with reference to the running direction of the upper branch of the belt indicated by the arrow in Fig. 3. Correspondingly the intermediate, or each intermediate drive unit 15b, one only is indicated in Fig. 1, draws the portion of upper branch of the belt 10 comprised between the same unit 15b and the drive unit immediately "upstream", in this specific case the unit 15a, and it also draws the portion of lower branch of the belt comprised between the unit 15b under consideration, and the drive unit located immediately "downstream", in this specific case constituted by the end drive unit 15c in Fig. 1. Likewise, the end unit 15c draws the portion of upper belt comprised between the end drive unit 15c and the intermediate unit 15b which is immediately "upstream" of a previous one. Fig. 1 also shows the compensation loops 17, provided in the lower branch of the belt 10 in correspondence with each of the drive units 15.

Each drive unit, as indicated schematically in Fig. 3, is substantially composed of an electric motor 18, for example an induction motor, provided with a flywheel 19; the shaft of the motor 18, through an opportune gearing 20, controls the rotation of the sprocket wheels 21, which act on the links of the upper and lower branches of the two chains 11 and 12 and draw the belt itself forward. It is evident that the constructive solutions of the various drive units, and of the conveyor belt itself, can be varied as compared with what is illustrated here, and that the lateral chains of the belt 10 could also be realized in a different way, without prejudice to the innovative principles according to the present invention.

According to the present invention, we start from the presupposition that the two branches, upper and lower, of the belt 10 should have the same value of theorical speed of running V1 and V2.

In practice, the speeds V1 and V2 in the various sections of belt comprised between two consecutive drive units 15, may vary in time for multiple reasons, principally owing to the varying of the tolerances of the dimensions of the single rings or links of the chains 11 and 12 in conveyors of this type, or to the wear of the chains or the belt in general, and the wear of the running guides. All this results in a continuous variation in the tautness and the speed of the belt.

Possible variations in tautness and speed in the lower branch of the conveyor belt 10 do not give rise to problems and do not cause particular difficulties, since they are automatically compensated for by the loops 17, which lengthen or shorten proportionally to the variation in speed V2. On the contrary, variations in speed V1 in the upper branch or in some specific sections of the upper branch, have to be avoided, since they cause bad functioning of the conveyor. In practice, one must operate in such a way that the sections of the upper branch of the conveyor belt will be running in synchronism with each other, at the same speed, without causing excessive tautness or slackening of the lateral chains or of the belt itself.

The object of present invention is to realize a speed control device for drive units, capable of automatically compensating for eventual variations in speed V1 in the upper branch of the belt, by utilizing the differential speed between the upper branch and the lower branch in correspondence with each drive unit.

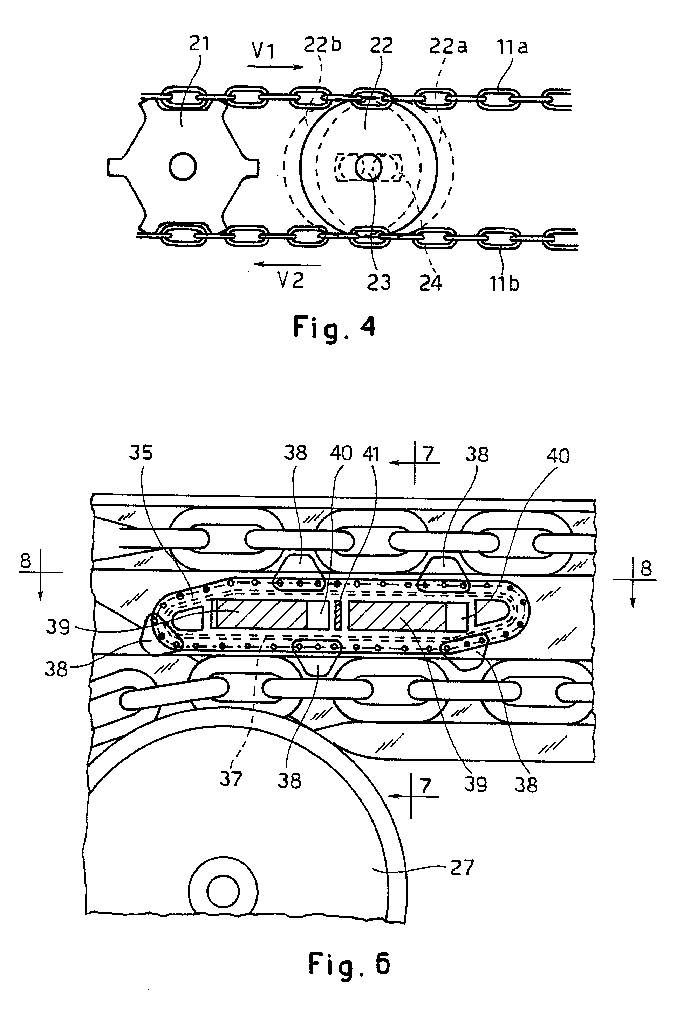

The principal innovation of the present invention can best be understand with reference to the scheme of Fig. 4 if referred to Fig. 1 and Fig. 3 of the drawings attached herewith. Fig. 4 shows a section of the upper branch of chain 11a and the corresponding section of the lower branch 11b and one only of the sprocket wheels 21 of a drive unit 15; V1 and V2 indicate the two speeds of the chain sections 11a and 11b. Moreover, 22 indicates a generic differential speed sensor such as a rolling member engaged with both the upper branch 11a and the lower branch 11b; the rolling member 22 is free to rotate on its own axis 23 and in its turn can run freely in both directions, along a guide 24 parallel to the running direction of the conveyor belt. It is evident that if the speeds V1 and V2 of the two branches of chain 11a and 11b are equal to each other, since their running directions are opposite each other, consequently the rolling member 22 is simply drawn in rotation around its own axis, remaining nevertheless still in a certain position, for example, in the position indicated with a continuous line in Fig. 4. On the contrary, when V1 differs form V2, this gives rise to a differential speed between the two branches of the chain, which acts on the rolling member 22 by making it move towards the right (22a) or towards the left (22b) according to whether V1 increases or decreases. Since the speeds V1 and V2 of the two branches of the chain are determined by the speeds of the electric motors of "upstream" and "downstream" drive units respectively, as previously described, according to the present invention the shifting of this rolling member 22 has been utilized in order to detect or to sense a differential variation in speed and to control the electric motor of the drive unit that such member 22 is associated with. In other words, the rolling member 22, which in this specific case has been represented in the form of a simple sprocket wheel, acts as a sensor of the differential speed that arises between the upper and the lower branches of the belt in correspondence with each drive unit 15, through which it is possible to operate a device that emits an electric signal indicating the variation in speed, in order to control the power supply to the electric motor 18 of the respective drive unit.

The electric part of the control device of the drive unit, which is operated by the rolling member 22 or differential speed sensor, can be realized in any way. For example, in the case shown a rolling member 22 has been provided which, in one of its running directions, operates a microswitch 25 connected to a control circuit 26 for the power supply of the motor 18, in such a way that the power supply is disconnected or connected respectively or varied for brief fractions of time sufficient to slow down or accelerate respectively the motor 18 which, during the periods of time in which the power supply is cut off or reduced, is continuously drawn in rotation by the energy accumulated by the flywheel 19.

A specific solution as far as concerns a drive unit with a special rolling member sensitive to the differential speed of the two branches of the conveyor belt is shown in the figures from 5 to 8 of the attached drawings. As shown in the said figures the two branches of chain 11a and 11b are drawn by the sprocket wheels 21 operated by the electric motor 18 and are guided in their path by idler gears or rollers 27, 28, 29, 30 and 31. At the entrance and exit extremities of the group, the chains run in opportune guides 32 and 33 on one side and 34 on the opposite side, in such a way as to maintain a stable orientation of their links. Between the guides 32 and 33 on the exit side of the drive unit, as referred to the running direction of the upper branch or the conveying direction of the goods, there is a rolling member 22 which in this specific case comprises a slider having an elongated body 35, in the form of a shuttle, provided with a peripheral track 36 in the form of a trough having a flat bottom surface on which an annular element or crawler 37 runs freely. The crawler 37 is provided with projecting parts or triangular teeth 38 at a pre-established distance from each other corresponding to the pitch of the rings or links of the chains or their multiples in such a way as to guarantee an engagement with both the branches, upper and lower, and a correct drawing in rotation of the crawler, or a drawing in advance or backwards of the slider 35. The slider in its turn is carried in a sliding way by two rectangular projections 39 that are integral with or fixed to the lateral guides 32 and 33 of the chain; the projections 39 protrudes through corresponding rectangular apertures 40 in the slider 35, which have a width greater than that of the projections 39 in such a way as to allow a working stroke for the differential speed sensing device, proportional to the maximum difference between the two speeds V1 and V2 of the two branches of the chain.

The guiding projections 39, apart from constituting a guide means for the slider 35, or more in general for the member which sense the differential speed between the two branches of the same chain, also constitute a stop means at the extremities of the usefull strake permitted to the above-mentioned sensing member. An arm 41 in the form of a plate, protrudes form an opening 42 of sufficient width for the stroke of the slider 35, formed in one lateral wall of the support structure of the drive unit, to operate the microswitch that controls the power supply of the electric motor, as described previously.

The working of the device described is briefly as follows : let us suppose that the various drive units 15 of the conveyor operate correctly in phase synchronism with each other and that therefore the speeds V1 and V2 of the branches of the chain 11 in correspondence with each sensing means are equal. In these conditions the differential speed will be nil and the sensing member 22 will all remain still in their position, being simply drawn in rotation around their own axes. If for any reason it happens that one drive unit, for example, the one indicated by 15b tends to decrease its speed as compared with the speed of the successive drive unit 15c, speed V2 of the lower branch in the section concerned between the unit 15b and the unit 15c tends to decrease; however, this does not create problems since the chain of the lower branch will go to accumulate in the loop 17 of the successive unit. Equally, a slowing down of a drive unit before or "upstream" of any drive unit, in the same way as the preceding case, does not create problems, since the upper branch of chain between two adjacent units 15 will be put in greater tension drawing the motor of the "upstream" unit 15 which has retarded, or braking the motor of the unit "downstream" which has accelerated.

On the contrary, if a drive unit, for example the unit 15a, tends to accelerate as compared with the unit immediately following, or located "downstream", for example the unit 15b, the links of the upper chain 11a, coming out form the upstream unit 15a, will tend to approach each other and accumulate locally, thus causing a slowing down of the upper chain in proximity to the drive unit 15a, which will be felt by the sensing member 22 as a decreasing of relative speed between the upper branch and the lower branch of the conveyor belt. The arising of this differential speed tends therefore to cause the shifiting of the sensor 22 in the same direction, towards or away from the microswitch 25, which will act to cause a momentary interruption or reduction of the electric power supplied to the motor 18 of the unit; this motor will slow down by what is necessary to draw the upper chain taut again. Therefore, reversing the sense of the differential speed, the sensor 22 will be moved forward again, or in the direction contrary to the preceding one, thus restoring the power supply or the normal working conditions of this drive unit. This working of the sensoring members 22 will come out automatically in the various drive units 15, every time a speed variation of one unit as compared with the following one or whenever an anomalous working condition will arise, keeping in synchronism all the drive units, preventing single units from assuming excessive overloads, and containing and reducing in this way many of the problems present with the control systems previously in use. The very setting-up of the entire conveyor plant is greatly simplified, making it possible on the whole to reduce intervention and subsequent controls in the installation of the plant, as well as the costs of construction and installation of the conveyor.

**Claims**

1. - A speed control device for drive units (15) in belt conveyors, in which the conveyor comprises a conveyor belt (10) running along a pre-established path, said belt (10) having an upper branch movable in one direction, and a lower branch movable in the opposite direction, parallely arranged with respect to the preceding one, and in which the conveyor comprises belt drive units (15) positioned at pre-established distances form each other, each drive unit (15) being driven by a respective electric motor (18), characterized by the fact that, each drive unit comprises sensing means (22) for sensing a differential speed variation between the upper branch and the lower branch of the belt (10), said sensing means (22) comprising a rolling member engaged between the upper branch and the lower branch of the belt (10) respectively, said rolling member being supported freely to run in both directions parallely to the two branches of the belt, and electric control means (25, 26) for the eletric motor (18), said control means (25, 26) being operatively connected to the said differential speed sensing means (22) of the conveyor belt (10).

2. - A device as claimed in claim 1 especially for chain conveyors, characterized by the fact that the said differential speed sensing means (22) comprises a rolling member disposed between the upper branch (11a, 12a) and the lower branch (11b, 12b) of at least one of the lateral chains (11, 12) of the conveyor belt (10).

3. - A device as claimed in claim 1, characterized by the fact that it comprises guide means (39) for said differential speed sensing means (22), in the running direction of the branches of th conveyor belt (10).

4. - A device as claimed in claim 1, characterized by the fact that the sensing means (22) is in the form of a sprocket wheel.

5. - A device as claimed in claim 1, characterized by the fact that the sensing means comprises a slider (35) means (39) for guiding said slider (35) parallely to the upper and lower branches of the belt (10), and an annular rolling member (37), freely revolving on said slider (35), said revolving annular member (35) comprising means for engaging with the upper and the lower branch respectively of the conveyor belt (10).

6. - A device as claimed in claim 5 especially for chain conveyors, characterized by the fact that said revolving annular member (35) is in the form of a crawler, and by the fact that the crawler presents projection means (38) for engaging with one lateral chain (11, 12) of the conveyor belt (10), said projection means (38) being spaced apart correspondingly to the pitch of the rings or links of the chain, or to a multiple of such pitch.

7. - A device as claimed in claim 5 or claim 6, characterized by the fact that the slider (35) comprises a peripheral guide channel (36) for said revolving annular member (37).

8. - An endless chain conveyor comprising a supporting frame, guide means (13) for a first and a second endless link chians having upper and lower branches (11a, 11b; 12a, 12b), said chains being interconnected each other to form a conveying surface, and chain drive units (15) characterized in that each drive unit (15) comprises speed sensing means (22) for sensing a differential speed variation between said upper and lower branches (11a, 11b; 12a, 12b) of at least one of said chains, said speed sensing means (13) to move in both directions of the conveyor, and control means (25) actuated by said speed sensing means (22) said control means (25) being operatively connected to the power supply (26) of said drive unit (15).

Fig. 1

Fig. 2

Fig. 3

Fig. 4

Fig. 6

Fig.5

0 275 562

**Fig. 7**

**Fig. 8**